# EUROPEAN PATENT APPLICATION

(11) **EP 3 203 188 A1**
(43) Date of publication of application: **09.08.2017**
(21) Application number: 16305124.6
(22) Date of filing: 04.02.2016
(51) Int. Cl.: G01C 21/34, H04W 48/20

(54) **AN APPARATUS AND A METHOD FOR DETERMINING A ROUTE FROM A FIRST LOCATION TO A SECOND LOCATION**

(71) Applicant: ALCATEL LUCENT, 92100 Boulogne-Billancourt (FR)
(72) Inventor: MALANCHINI, Ilaria, 70435 Stuttgart (DE); SURYAPRAKASH, Vinay, 70435 Stuttgart (DE); BARACCA, Paolo, 70435 Stuttgart (DE)
(74) Representative: 2SPL Patentanwälte PartG mbB

(57) **Abstract**

A method (100) for determining a route from a first location to a second location is provided. The method includes receiving (102) a request for determining a route from the first location to the second location. The request comprises information on the first location and information on the second location. Further, the method includes receiving (104) information on predicted future states of a plurality of network access points providing access to a mobile communication network, wherein coverage areas of the plurality of network access points at least partly cover an area between the first location and the second location. The method further includes calculating (106) the route from the first location to the second location based on the request and the information on the predicted future states of the plurality of network access points.

## Description

### Field

Examples relate to navigation methods for improved connectivity to a mobile communication network. In particular, examples relate to a method as well as an apparatus for determining a route from a first location to a second location.

### Background

A problem faced by mobile communication network providers is the exponential growth in network traffic demand. For example, mobile users moving at higher speeds (e.g. while driving) may be particularly disadvantaged since they may switch between network coverage areas which are well catered and coverage holes, or traverse very crowded areas (resulting in reduced network performance). This may impair a Quality of Service (QoS) experienced by a user since the user may, e.g., experience connection termination, low data rates, or high latency.

In view of the foregoing problems, document US 9,043,135 B2 proposes a navigation method which takes into account wireless network coverage map data when selecting a route for a user. However, the method takes into account merely static coverage map data. The method does not take into account any data concerning a current state (e.g. load or latency) of a network access point or an evolution of the network. Hence, a selected route may guide a user, e.g., through crowded areas resulting in a poor QoS for the user (e.g. due to a low data rate or a high latency of the network in the crowded area).

Document US 2013/0024107 A1 proposes a navigation method taking into account current network accessibility information when determining a route for a user. However, the method takes into account merely information on the current state of a network access point. For example, multiple users contemporaneously requesting a route from a given origination location to a destination location are routed along the same path. Hence, although the current network states may be acceptable or good, the users may experience network congestion due to the overlapping routes. Accordingly, a QoS experienced by a user may be impaired.

Hence, from a network provider's perspective, there may be a desire for a navigation method allowing to manage and guide traffic into areas with good coverage, high capacity and low load. From a user's perspective, there may be a desire for a method maximizing network coverage and QoS along a route.

### Summary

According to a first aspect of the present disclosure, it is provided a method for determining a route from a first location to a second location. The method comprises receiving a request for determining a route from the first location to the second location. The request comprises information on the first location and information on the second location. The method further comprises receiving information on predicted future states of a plurality of network access points providing access to a mobile communication network, wherein coverage areas of the plurality of network access points at least partly cover an area between the first location and the second location. Further, the method comprises calculating the route from the first location to the second location based on the request and the information on the predicted future states of the plurality of network access points.

In some examples, the method further comprises sending information on the calculated route to the apparatus having issued the request for determining a route from the first location to the second location.

According to some examples, prior to receiving information on the predicted future states of the plurality of network access points, the method further comprises sending a request for information on the predicted future state of one of plurality of network access point to the one network access point, a control unit of the one network access point, or a server of a provider of the mobile communication network.

In some examples, the predicted future state of at least one of the plurality of network access points comprises information on a predicted future QoS of the network access point.

According to some examples, the predicted future QoS is based on a second request for determining a route from a third location to a fourth location, the request comprising information on the third location and information on the fourth location, wherein the second request and the request for determining the route from the first location to the second location are issued from different apparatuses.

In some examples, the second request is issued within a coverage area of a network access point, the network access point having a predetermined maximum distance to the first location.

In some examples, the second request is issued within a coverage area of a network access point, the network access point having a predetermined maximum distance to a straight connecting the first location and the second location.

According to some examples, the second request is issued within a predetermined time frame preceding the time of reception of the request for determining the route from the first location to the second location.

In some examples, the predicted future QoS is based on a QoS history of the network access point.

According to some examples, calculating the route from the first location to the second location is further based on information on the current states of the plurality of network access points.

In some examples, the request determining the route from the first location to the second location further comprises information on a desired network parameter, wherein calculating the route from the first location to the second location is further based on the desired network parameter.

According to some examples, the desired network parameter is a minimum data rate of the network, a maximum latency of the network, a transmission technology supported by the network, a maximum load of the network, a maximum packet loss rate of the network, or an assured network availability along the route from the first location to the second location.

In some examples, the request further comprises information on a desired route parameter, wherein calculating the route from the first location to the second location is further based on the desired route parameter.

According to some examples, the desired route parameter is a maximum increase in travel time compared to a shortest travel time between the first location and the second location, or a maximum increase in route distance compared to a shortest route distance between the first location and the second location.

In some examples, the method further comprises receiving updated information on the predicted future state of at least one of the plurality of network access points, and recalculating at least part of the route from the first location to the second location based on the updated information on the predicted future state of the network access point.

According to a second aspect of the present disclosure, it is provided a computer program having a program code for performing one of the above methods, when the computer program is executed on a computer or processor.

According to a third aspect of the present disclosure, it is further provided an apparatus for determining a route from a first location to a second location. The apparatus comprises a first interface configured to receive a request for determining a route from the first location to the second location. The request comprises information on the first location and information on the second location. The apparatus further comprises a second interface configured to receive information on predicted future states of a plurality of network access points providing access to a mobile communication network, wherein coverage areas of the plurality of network access points at least partly cover an area between the first location and the second location. Further, the apparatus comprises a processor unit configured to calculate the route from the first location to the second location based on the request and the information on the predicted future states of the plurality of network access points.

### Brief description of the Figures

Some embodiments of apparatuses and/or methods will be described in the following by way of example only, and with reference to the accompanying figures, in which
Fig. 1 illustrates a flowchart of an example of a method for determining a route from a first location to a second location;
Fig. 2 illustrates a comparison between a conventionally determined route and a route determined according to examples described herein;
Fig. 3 illustrates a comparison between a conventionally determined route and routes determined according to examples described herein; and
Fig. 4 illustrates an example of an apparatus for determining a route from a first location to a second location.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent", to name just a few examples).

The terminology used herein is for the purpose of describing particular examples and is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong, unless expressly defined otherwise herein.

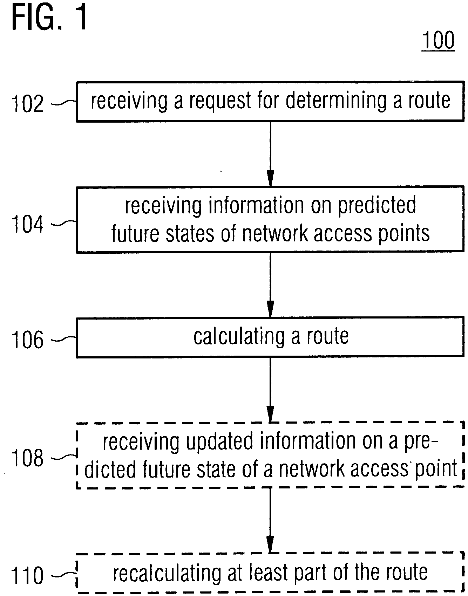

**Fig. 1** illustrates a flowchart of a method 100 for determining a route from a first location to a second location. The route is a specific, precise way from the first location to the second location. The route comprises one or more segments (sections). A segment may, for example, be related to a certain type of road (e.g. highway, country road, rural road etc.) or a specific road section of the route. For example, a route may comprise four segments, wherein a first segment of the route is a road section of a rural road, a second section of the route is a road section of a highway, the third segment of the route is a road section of a country road, and the fourth segment is a road section of another rural road.

Method 100 comprises receiving 102 a request for determining a route from the first location to the second location. For example, the request may be received from a User Equipment (UE), i.e. any device used directly by an end-user to communicate. A UE may, e.g., be a cell phone, a smartphone, a personal digital assistant, a tablet computer or a laptop computer. The request may, e.g., be sent from a navigation application or program executed on the UE. In some examples, the request may be sent from an automotive navigation system or an infotainment system of a vehicle - either directly or routed via a UE. The request may be sent via, e.g., a cellular network and/or a Wireless Local Area Network (WLAN).

The request comprises information on the first location and information on the second location. For example, the request may contain the position data of at least one of the first and the second location. In some examples, the information on the first location or the information on the second location may be other information like an address, a name or a designation of the first or second location, which may be converted to actual position data of the first or second location suitable for route calculation (determination). The first location may be equal to or different from a current location of a user / apparatus issuing the request. For example, if a user's current location is selected as the first location by the user, the user's UE / navigation application / automotive navigation system etc. may, e.g., use base station triangulation, or Global Position System (GPS) information for determining the information on the first location. In some examples, the user may enter the address of the first location and/or second location into a navigation application or program, or select the first location and/or second location on a map of the navigation application or program. The request may additionally comprise further information, e.g., a desired travel start time or a desired arrival time at the second location. In some example, if the first location is different from the current location of the user, the request may further contain information that the first location is different from the current location of the user, so that the transfer of the user from his / her current location to the first location may be taken into consideration in the subsequent course of the route determination. Again, the current location may, e.g., be determined using base station triangulation or GPS information.

The method 100 further comprises receiving 104 information on predicted future states of a plurality of network access points providing access to a mobile communication network. Generally, a network access point is a hardware device that allows a wireless device (e.g. a UE or an infotainment system of a vehicle) to connect to a dedicated network (e.g. a cellular network or a WLAN) using one or more transmission standards. The mobile communication network may, for example, correspond to one of the mobile communication systems standardized by the 3rd Generation Partnership Project (3GPP), e.g., Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication networks with different standards, e.g. Worldwide Interoperability for Microwave Access (WIMAX) IEEE 802.16 or WLAN IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc.

The information on the predicted future states of the plurality of network access points may, e.g., be received from a network provider, or a central control node of the mobile communications network. In some examples, the information on the predicted future states of the plurality of network access points may be received from the network access points or control units of the network access points. For example, for the network access point comprising a Base Transceiver Station (BTS) of a GSM mobile communications system, the information on the predicted future state of the BTS may be received from the BTS itself or a Base Station Controller (BSC) controlling the BTS. For the network access point comprising a Node B of a UMTS mobile communications system, the information on the predicted future state of the Node B may be received from the Node B itself or a Radio Network Controller (RNC) controlling the BTS. For example, for the network access point comprising an eNodeB of a LTE mobile communications system, the information on the predicted future state of the eNodeB may be received from the eNodeB.

Prior to receiving 104 the information on the predicted future states, the method may optionally comprise sending a request for information on the predicted future state on one or more of the plurality of network access points to, e.g., one or more of the network access points, one or more control units of the network access points, a central control node of the mobile communications network, or a server of the network provider.

The state of a network access point is a quantity describing the accessibility of the network via the network access point and the performance of the network access provided by the network access point. For example, the state of the network access point may include a QoS of the network access point. The QoS is the overall performance of the network provided by the network access point, which is seen by the user. The QoS may be qualitatively determined by, e.g., weighting one or more of the following factors: a minimum data rate of the network, a maximum data rate of the network, an actual (predicted) data rate of the network at a certain time instant, a minimum latency of the network, an actual (predicted) latency of the network at a certain time instant, a transmission technology supported by the network, an actual (predicted) bandwidth of the network at a certain time instant, a maximum load of the network, an actual (predicted) load of the network at a certain time instant, an actual (predicted) error rate of the network at a certain time instant, an actual (predicted) packet loss rate of the network at a certain time instant, and an actual (predicted) jitter of the network at certain time instant. However, the state of the network access point is not limited to the above example. In some examples, other quantities than the QoS may be used to describe the state of the network access point. For example, the state of the network access point may be determined by a combination of the actual (predicted) bandwidth and an actual (predicted) load (capacity) of the network provided by the network access point. In other words, the state of a network access point may comprise any quantity suitable for describing the actual (predicted) quality of the network provided by the network access point at a certain time instant.

In the proposed concept, predicted future states of a plurality of network access points are received. That is, the method uses predicted quantities describing expected future states of the network access points. In some examples, state predictions for different future time instants may be used for different ones of the plurality of network access points. A state prediction for a first future time instant may be used for a first one of the plurality of network access points, whereas a state prediction for a different second future time instant may be used for a second one of the plurality of network access points. The state predictions may, in some examples, be related to expected or desired future time instants of passing the coverage areas of the respective network access points. The expected or desired future time instant of passing the coverage area of a network access point may, e.g., be determined on the basis of additional information (e.g. desired travel start time, desired arrival time, a required transfer of a user from its current location to the second location) contained in the request for route determination, or current location information of the user / apparatus. For example, the predicted future state of one or more of the plurality of network access points may include a predicted future QoS, a predicted load etc. of the network access point. The predicted future state of a network access point may, e.g., be based on a history of the state of the network access point. For example, a predicted future QoS may be calculated or extrapolated based on a QoS history of the network access point. In the absence of any trigger events indicating a change in characteristics of the network provided by a network access point, the current state of the network access point may, in some examples, be used as predicted future state of the network access point.

A trigger event indicating a change in characteristics of the network provided by a network access point may be other/further requests for determining a route. For example, a second request (issued from a different apparatus / user) for determining a route from a third location to a fourth location, wherein the request comprises information on the third location and information on the fourth location, may allow to estimate or predict an evolution of characteristics of the network provided by a network access point. The second request may, e.g., be issued within a coverage area of a network access point which has a predetermined maximum distance (e.g. 100 meters (m), 250 m, 500 m, 750 m, 1 kilometer (km), 1.5 km, 2 km, 2.5 km, or 5 km) to the first location. Alternatively, the second request may, for example, be issued within a coverage area of a network access point which has a predetermined maximum distance (e.g. 100 m, 250 m, 500 m, 750 m, 1 km, 1.5 km, 2 km, 2.5 km, or 5 km) to a straight connecting the first location and the second location. From the second request, it may be determined that the user or vehicle issuing the second request will probably pass the coverage of the network access point, and hence use the network access point for connecting to the mobile communication network. Accordingly, a load, a latency, an error rate or any other parameter of the network provided by the network access point may change. Hence, the characteristics of the network provided by the network access point may change. By analyzing the second request, the impact of the request on the evolution of the network may be estimated (predicted), so that a (probable) future state of the network access point may be determined.

In some examples, the second request may be issued within a predetermined time frame (e.g. 5, 10, 15, 20, 25 or 30 minutes) preceding the time of reception of the request for determining the route from the first location to the second location. Accordingly, the latest route requests - having a higher relevance - are considered. Past route requests (i.e. route requests issued outside the predetermined time frame) may thus be rejected, since the users / vehicles issuing these requests likely already passed (left) the coverage areas of interest, so that they probably do not affect the network characteristics in these coverage areas at the time the user / vehicle will pass them.

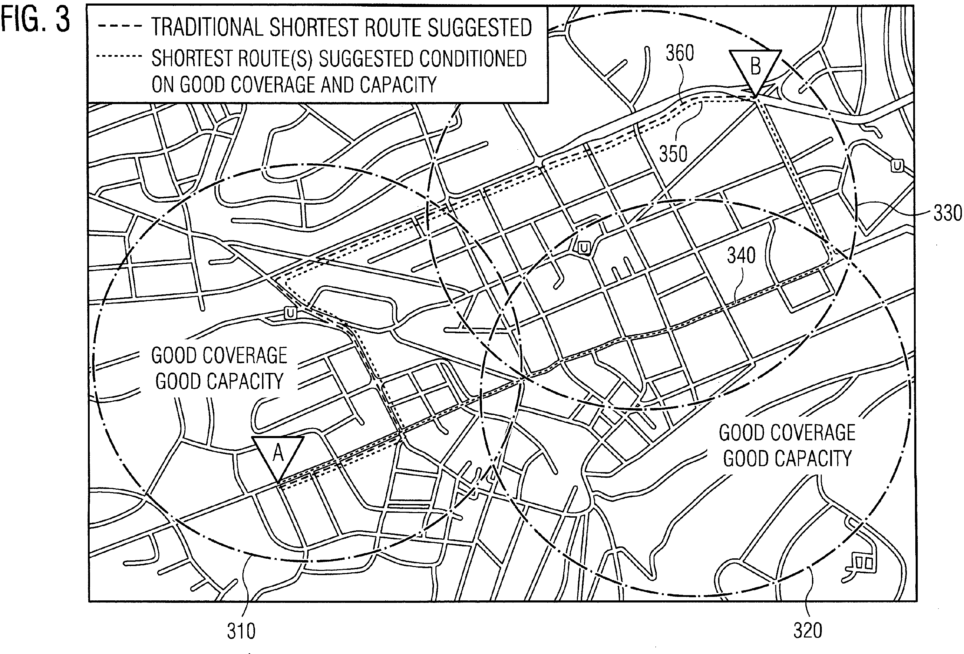

Further details on using other route requests for predicting the evolution of the state of a network access point are described in connection with Fig. 3.

The respective coverage areas of the plurality of network access points used by the proposed method cover at least partly an area between the first location and the second location. It is to be noted that the "area between the first location and the second location" is not limited to the area defined by the straight connecting the first location and the second location. Rather, the area between the first location and the second location comprises any location having predefined maximum orthogonal distance to the straight connecting the first location and the second location. The predefined maximum orthogonal distance may, in some examples, vary based on a distance between the first location and the second location. For example, the predefined maximum orthogonal distance may be 100 m, 250 m, 500 m, 750 m, 1 km, 1.5 km, 2 km, 2.5 km, 5 km, 7.5 km, 10 km, 20 km, 25 km, 50 km, 100 km, or any other suitable value. Since only part of the coverage area of a network access point is to be located between the first location and the second location, the network access point itself may be located outside the area between the first location and the second location. However, the plurality of network access points may, in some examples, comprise not all network access points having a coverage area between the first and the second location. In other words, the plurality of network access points used by the proposed method may be a subset of all available network access points having respective coverage areas between the first and second locations. For example, the plurality of network access points may comprise only network access points whose respective coverage areas have a predefined maximum (orthogonal) distance to (a segment of) a possible route from the first location to the second location (further details on possible routes are described in the next paragraph).

The method 100 further comprises calculating 106 a route from the first location to the second location based on the information contained in the (received) request and the (received) information on the predicted future states of the plurality of network access points. For example, an algorithm may be used directly taking into account the information on the first and second location and the information on the predicted future states of the plurality of network access points. The algorithm may be based on conventional approaches for, e.g., calculating a route with a shortest travel time or a route with a shortest route distance. The algorithm may, e.g., be based on Dijkstra's algorithm, hub labeling, transit node routing or other concepts. For example, the predicted future state of a network access point may be used as a weighting or quality factor for a road section (segment of the route) passing the coverage area of a network access point. Accordingly, possible segments of the route may be weighted by the network quality along the respective segment. As a consequence, a route may be calculated, which comprises (almost) only route segments providing a minimum network quality. However, the proposed concept is not limited to the above example. Rather, various algorithms/approaches or modifications to conventional algorithms/approaches (not taking into account predicted future states) may be possible. In alternative examples, a plurality of (possible) routes (i.e. two or more routes) may be calculated conventionally, i.e. without taking into account the information on the predicted future states of the plurality of network access points, in a first step and a quality value or a score for each of the routes may be determined based on the information on the predicted future states of the plurality of network access points along the possible routes in a further step. Accordingly, the route with the best quality value or a score may be presented to the user in a still further step.

Information on the calculated route from the first location to the second location may then be sent to the apparatus having issued the request for route determination. For example, the information on the calculated route may be provided to the UE of a user, a vehicle navigation system, or an infotainment system of a vehicle.

The proposed method 100 may allow to determine a route from the first location to the second location with improved network coverage, capacity etc. Accordingly, a user may experience an improved QoS of the mobile communication network along the proposed route compared to conventional approaches. By taking into account future predicted states of potential network access points for determining a route, a route may be determined which likely offers the best network properties during the actual period of journey (which is in the future). For a user, an additional option in addition to conventional route options (e.g. shortest travel time, shortest route distance) is provided, so that a pool of options for the user is increased. Moreover, the proposed method may allow a network provider to collect information on current and/or future network usage (including the probable location and type of usage). By taking into account this data, future states of network access points may be predicted, so that an evolution of the mobile communications network may be determined with increased precision and probability. Moreover, a network provider may be allowed to control network traffic by guiding users along routes with lower load. Hence, load balancing may be possible for a network provider.

The method 100 may, e.g., be performed (executed) by a network access point (e.g. BTS, Node B, eNodeB), a controller of a network access point (e.g. BSC, RNC) or any higher layer network control system of a network provider.

In some examples, calculating 106 the route from the first location to the second location is not only based on the predicted future states of the network access points. Rather, the route calculation may be further based on information on the current states of the plurality of network access points. Accordingly, a current network status and a network status in the near future (especially in the vicinity of the first location) may be taken into account for the route calculation. By taking into account both, the current and future states of the plurality of network access points, the network availability, capacity, etc. along the route may be reproduced more accurately, so that a route with an improved QoS of the mobile communication network may be provided to a user.

The request for determining the route from the first location to the second location may, in some examples, further comprise information on one or more desired network parameters. The desired network parameter may, for example, be a minimum data rate of the network, a maximum latency of the network, a transmission technology supported by the network, a bandwidth of the network, a maximum load of the network, a maximum packet loss rate of the network, or an assured network availability along the route from the first location to the second location. For example, the desired network parameter may be selected by a user directly. Alternatively, the user may select an application or program, or a category of applications or programs (e.g. for video streaming, internet radio, web conferencing services), wherein one or more desired network parameters are associated to the application or program, or the category of applications or programs. Calculating 106 the route from the first location to the second location may thus be further based on the desired network parameter(s). Accordingly, a route may be calculated which satisfies the user's network demands (constraints). Thus, a user may be enabled to travel along a route which allows him or her to accurately use a desired application or program requiring access to the internet.

In some examples, the request for determining the route from the first location to the second location may further comprise information on a desired route parameter. For example, the desired route parameter may be a maximum increase in travel time compared to a shortest travel time between the first location and the second location, or a maximum increase in route distance compared to a shortest route distance between the first location and the second location. The maximum increase in time or the maximum increase in route distance may be a relative value (e.g. 1 %, 3 %, 5 %, or 10 %) or an absolute value (e.g. 1 minute (min), 3 min, 5 min, 10 min, 15 min, 20 min / 500 m, 1 km , 5 km, 10 km, 15 km, 20 km). Calculating 106 the route from the first location to the second location may thus be further based on the desired route parameter. Accordingly, a user may be allowed to adjust the trade-off between network quality and route distance / travel time according to his / her personal preferences. In other words, an additional degree of freedom for adjusting a route may be provided for a user.

It is to be noted that apart from the parameters, information, etc. described above, additional parameters, data, constraints, information, etc. may be used for calculating the route. For example, information on current or expected traffic conditions (e.g. traffic congestion reports), a road type / means of transportation (e.g. a ferry) which is to be avoided, or constraints on geographical areas (e.g. only domestic roads) may be used additionally for calculating the route.

In some examples, the method 100 may further comprise receiving 108 updated information on the predicted future state of at least one of the plurality of network access points (e.g. in response to a request for updated information). The updated information may be received from the same source or another source as the initially received information on the predicted future state. The updated information may comprise the complete state information of the network access points, or merely information on a parameter related to the network access point that has changed. In other words, the previously received information on the future predicted state of one or more network access points may, in some examples be replaced in its entirety by the newly received updated information. In some examples, merely part of the previously received information is replaced by the newly received updated information. Accordingly, the method 100 may further comprise recalculating 110 at least part of the route from the first location to the second location based on the updated information on the predicted future state of the network access point. That is, either part of the route may be recalculated, or the whole route may be recalculated. However, merely recalculating part of the route may commonly be sufficient and more efficient. In order to adequately recalculate part of the route, the method may further comprise querying a current location of a user/vehicle/apparatus, which transmitted the initial request for determining the route from the first location to the second location. Accordingly, the route may be recalculated only from the current location of the user/vehicle/apparatus to the second location. Hence, if the evolution of the mobile communication network deviates from the prediction used for the initial route calculation, the route provided to the user / vehicle /apparatus may be updated in order to ensure high QoS for the user.

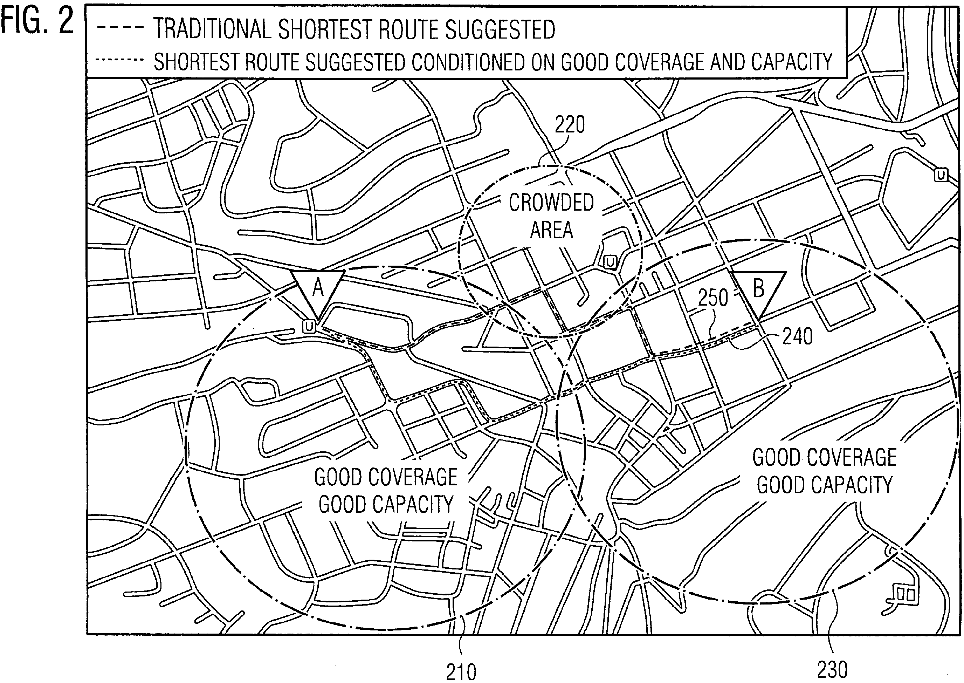

A first comparison between a conventionally determined route and a route determined according to examples described herein is illustrated in **Fig. 2.** Fig. 2 illustrates a situation, in which a user wants to travel from the first location A to the second location B. At the time the user sends his request for determining the route from A to B, the coverage areas 210, 220 and 230 of three exemplary network access points (e.g. eNodeBs) provide a good coverage and a good capacity (i.e. low load). The area covered by the coverage area 220 is known to be highly crowded in the near future (e.g. 5 mins later). Accordingly, a high load of the network access point may be expected. However, the user wants to use an application on his / her UE, which requires a high data rate (e.g. for a video stream). The user sends a request with the information that he / she wants to travel from A to B. By selecting that he / she wants to watch a video stream along the route, according desired network parameters are added to the request. Additionally, the request comprises information on communication standards (e.g. 3G or LTE) supported by the user's UE, and a desired route parameter (e.g. maximum increase in route distance or travel time compared to shortest route). Based on the constraints sent with the user request and information on the future states of the network access points of the coverage areas 210, 220, 230 (and optionally the current states of the network access points, traffic condition, etc.), route 240 is calculated according to examples described herein. It is evident from Fig. 2, that the route 240 traverses exclusively the coverage areas 210, 230 providing good coverage and good capacity in the future, whereas the crowded coverage area 220 providing merely poor network capacity in the future is avoided.

As a comparison, dashed line 250 illustrates the shortest route determined according to a conventional navigation method. It is evident, that the shortest route 250 traverses the crowded coverage area 220. When travelling through the crowded coverage area 220, a user may, e.g., experience skips on his / her video stream or connection problems due to the high load on the network access point. Accordingly, a user may experience a high QoS along the route 240, whereas the user experiences a low QoS along the conventional route 250.

A second comparison between a conventionally determined route and routes determined according to examples described herein is illustrated in **Fig. 3****.** In Fig. 3, a plurality of users wants to travel from the first location A to the second location B. For example, such a situation may arise at the end of a concert or a sports event, when people want to go from the arena, stadium, or concert hall to the next motorway in order to travel back to their homes. It is therefore to be expected that the plurality of users transmit their requests at almost the same time. At the time the users send their requests for determining the route from A to B, the coverage areas 310, 320 and 330 of three exemplary network access points (e.g. eNodeBs) provide a good coverage and a good capacity (i.e. low load). A conventional navigation method would propose the same route 360 to all users. Accordingly, all users would pass the coverage areas 310 and 330, so that the load of the network access points of coverage areas 310, 330 may increase up to 100% (i.e. network congestion occurs). Accordingly, the data rate of the network would decrease in the coverage areas 310, 330, whereas a latency of the network would increase. Hence, the users travelling along the route 360 would experience a poor QoS by the network.

As discussed above in connection with Fig. 1, requests of other users may be used for predicting future states of network access points. Accordingly, the request of the plurality of users for determining a route from A to B may be used to predict future states (e.g. a load) of the network access points of the coverage areas 310, 320, 330. After receiving the requests of a fraction of the plurality of users, it may, e.g., be predicted that the load of the network access point of coverage area 330 will be (almost) equal to the maximum allowable load in order to be able to provide a certain QoS. Accordingly, the proposed method provides route 350 which is equal to conventional shortest route 360 to only this fraction of the users. For the other users, the proposed method will use the information on the future state of the network access point of coverage area 330 for determining a route that avoids coverage area 330. Additionally using the information on the future state of the network access point of coverage area 320, which provides a good coverage and a good capacity according to the prediction, the proposed method hence calculates the route 340 traversing coverage area 320 for the other users. That is, the method may allow load balancing among plural network access points. Accordingly, the users on both routes 340 and 350 may experience a high QoS.

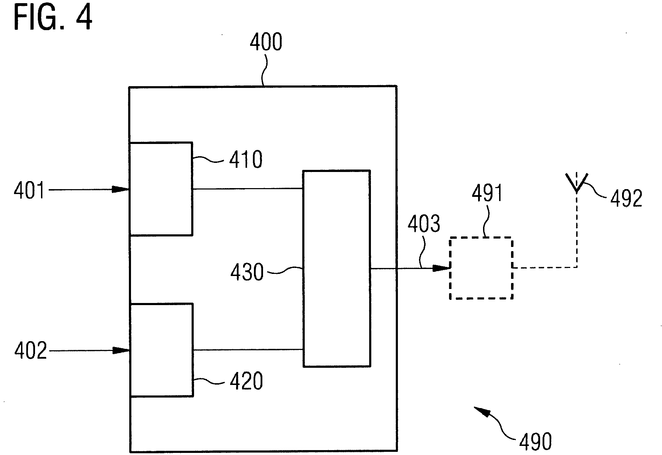

An example of an apparatus 400 for determining a route from a first location to a second location is illustrated in **Fig. 4****.**

The apparatus 400 comprises a first interface 410 configured to receive a request 401 for determining a route from the first location to the second location. The request comprises information on the first location and information on the second location. The first interface 410 may, e.g., be an electrical, or optical terminal for communicating with another hardware component. As discussed above in connection with Fig. 1, the request may, e.g., be received from a UE, an automotive navigation system or an infotainment system of a vehicle.

The apparatus 400 comprises a second interface 420 configured to receive information 402 on predicted future states of a plurality of network access points providing access to a mobile communication network. The coverage areas of the plurality of network access points cover at least partly an area between the first location and the second location. Like the first interface 410, the second interface 420 may, e.g., be an electrical, or optical terminal. As discussed above in connection with Fig. 1, the information on the predicted future states of the plurality of network access points may, e.g., be received from a network provider, a central control node of the mobile communications network, the network access points (e.g. a BTS, a Node B or a eNodeB) or control units (e.g. a BSC, or an RNC) of the network access points. Prior to receiving the information 402 on predicted future states, a request for this information may be sent via the second interface 420 (or another dedicated interface) to, e.g., a server of a network provider, a central control node of the mobile communications network, one or more network access points, or control units of the network access points.

Further, the apparatus 400 comprises a processor unit 430 configured to calculate a route from the first location to the second location based on the request and the information on the predicted future states of the plurality of network access points. The processor unit 430 may output the calculated route via the output signal 403. The processor unit 430 may be a single dedicated processor, a single shared processor, or a plurality of individual processors, some of which or all of which may be shared. However, the term "processor unit" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

The apparatus 400 may allow determining a route from the first location to the second location with improved network coverage, capacity etc. Accordingly, a user may experience an improved QoS of the mobile communication network along the proposed route compared to conventional approaches. By taking into account future predicted states of potential network access points for determining a route, a route may be determined which likely offers the best network properties during the actual period of journey (which is in the future). The apparatus 400 may allow a network provider to collect information about current and future network usage (including the probable location and/ or type of usage). By taking into account this data, future states of network access points may be predicted, so that an evolution of the mobile communications network may be determined with increased precision and probability. Moreover, the apparatus 400 may allow a network provider to control network traffic by guiding users along routes with lower load. Hence, load balancing may be possible for a network provider.

In some examples, the apparatus 400 may comprise one or more additional interfaces configured to receive one or more of the additional information for route calculation as described in connection with Figs. 1 to 3. Accordingly, the processing unit 430 may be configured to calculate the route based on the additional information. Moreover, the processing unit 430 may be configured to recalculate the route, in case the second interface receives updated information on the predicted future state of at least one of the plurality of network access points.

The apparatus 400 may, e.g., be part of a network access point 490 or a controller of a network access point 490. For example, the network access point 490 may be a BTS, a Node B or an eNodeB. Accordingly, the output signal 403 of the processor unit 430, which contains information on the calculated route, may be provided to additional electronic circuitry 491 (e.g. a filter, a digital-to-analog converter, a mixer, etc.) of the network access point 490 in order to further process the output signal 403, so that it may be transmitted to the user / vehicle via an antenna element 492. However, the apparatus 400 may, in some examples, also be part of a higher layer network control system of a network provider. Accordingly, the output signal 403 containing information on the calculated route may be sent to the user via a different signal path.

The aspects and features mentioned and described together with one or more of the previously detailed examples and figures, may as well be combined with one or more of the other examples in order to replace a like feature of the other example or in order to additionally introduce the feature to the other example.

Examples may further be a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. It will thus be appreciated that those skilled in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventors to furthering the art, and are to be construed as being without limitation to such specifically recited examples and conditions. Moreover, all statements herein reciting principles, aspects, and examples of the disclosure, as well as specific examples thereof, are intended to encompass equivalents thereof.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other of the dependent or independent claims. Such combinations are explicitly proposed herein unless it is stated that a specific combination is not intended. Furthermore, it is intended to include also features of a claim to any other independent claim even if this claim is not directly made dependent to the independent claim.

## Claims

1. A method (100) for determining a route from a first location to a second location, comprising:
receiving (102) a request for determining a route from the first location to the second location, the request comprising information on the first location and information on the second location;
receiving (104) information on predicted future states of a plurality of network access points providing access to a mobile communication network, wherein coverage areas of the plurality of network access points at least partly cover an area between the first location and the second location; and
calculating (106) the route from the first location to the second location based on the request and the information on the predicted future states of the plurality of network access points.

2. The method of claim 1, wherein the method further comprises sending information on the calculated route to the apparatus having issued the request for determining a route from the first location to the second location.

3. The method of claim 1 or claim 2, wherein, prior to receiving (104) information on the predicted future states of the plurality of network access points, the method further comprises:
sending a request for information on the predicted future state of one of plurality of network access point to the one network access point, a control unit of the one network access point, or a server of a provider of the mobile communication network.

4. The method of any of claims 1 to 3, wherein the predicted future state of at least one of the plurality of network access points comprises information on a predicted future quality of service of the network access point.

5. The method of claim 4, wherein the predicted future quality of service is based on a second request for determining a route from a third location to a fourth location, the request comprising information on the third location and information on the fourth location, wherein the second request and the request for determining the route from the first location to the second location are issued from different apparatuses.

6. The method of claim 5, wherein the second request is issued within a coverage area of a network access point, the network access point having a predetermined maximum distance to the first location.

7. The method of any of claims 3 to 6, wherein the predicted future quality of service is based on a quality of service history of the network access point.

8. The method of any of the preceding claims, wherein calculating (106) the route from the first location to the second location is further based on information on the current states of the plurality of network access points.

9. The method of any of the preceding claims, wherein the request for determining the route from the first location to the second location further comprises information on a desired network parameter, and wherein calculating (106) the route from the first location to the second location is further based on the desired network parameter.

10. The method of claim 9, wherein the desired network parameter is a minimum data rate of the network, a maximum latency of the network, a transmission technology supported by the network, a bandwidth of the network, a maximum load of the network, a maximum packet loss rate of the network, or an assured network availability along the route from the first location to the second location.

11. The method of any of the preceding claims, wherein the request for determining the route from the first location to the second location further comprises information on a desired route parameter, and wherein calculating (106) the route from the first location to the second location is further based on the desired route parameter.

12. The method of claim 11, wherein the desired route parameter is a maximum increase in travel time compared to a shortest travel time between the first location and the second location, or a maximum increase in route distance compared to a shortest route distance between the first location and the second location.

13. The method of any of the preceding claims, further comprising:
receiving (108) updated information on the predicted future state of at least one of the plurality of network access points; and
recalculating (110) at least part of the route from the first location to the second location based on the updated information on the predicted future state of the network access point.

14. A computer program having a program code for performing the method of any of claims 1 to 13, when the computer program is executed on a computer or processor.

15. An apparatus (400) for determining a route from a first location to a second location, comprising:
a first interface (410) configured to receive a request (401) for determining a route from the first location to the second location, the request comprising information on the first location and information on the second location;
a second interface (420) configured to receive information (402) on predicted future states of a plurality of network access points providing access to a mobile communication network, wherein coverage areas of the plurality of network access points at least partly cover an area between the first location and the second location; and
a processor unit (430) configured to calculate the route from the first location to the second location based on the request and the information on the predicted future states of the plurality of network access points.

## Amended claims

### Amended claims in accordance with Rule 137(2) EPC.

1. A method (100) for determining a route for a user from a first location to a second location, comprising:
receiving (102) a request for determining a route for a user from the first location to the second location, the request comprising information on the first location and information on the second location;
receiving (104) information on predicted future states of a plurality of network access points providing access to a mobile communication network, wherein coverage areas of the plurality of network access points at least partly cover an area between the first location and the second location; and
calculating (106) the route for a user from the first location to the second location using an algorithm which takes into account the request and the information on the predicted future states of the plurality of network access points.

2. The method of claim 1, wherein the method further comprises sending information on the calculated route to an apparatus having issued the request for determining a route for a user from the first location to the second location.

3. The method of claim 1 or claim 2, wherein, prior to receiving (104) information on the predicted future states of the plurality of network access points, the method further comprises:
sending a request for information on the predicted future state of one of plurality of network access point to the one network access point, a control unit of the one network access point, or a server of a provider of the mobile communication network.

4. The method of any of claims 1 to 3, wherein the predicted future state of at least one of the plurality of network access points comprises information on a predicted future quality of service of the network access point.

5. The method of claim 4, wherein the predicted future quality of service is based on a second request for determining a route for a user from a third location to a fourth location, the request comprising information on the third location and information on the fourth location, wherein the second request and the request for determining the route for a user from the first location to the second location are issued from different apparatuses.

6. The method of claim 5, wherein the second request is issued within a coverage area of a network access point, the network access point having a predetermined maximum distance to the first location.

7. The method of any of claims 4 to 6, wherein the predicted future quality of service is based on a quality of service history of the network access point.

8. The method of any of the preceding claims, wherein calculating (106) the route for a user from the first location to the second location is further based on information on the current states of the plurality of network access points.

9. The method of any of the preceding claims, wherein the request for determining the route for a user from the first location to the second location further comprises information on a desired network parameter, and wherein calculating (106) the route for a user from the first location to the second location is further based on the desired network parameter.

10. The method of claim 9, wherein the desired network parameter is a minimum data rate of the network, a maximum latency of the network, a transmission technology supported by the network, a bandwidth of the network, a maximum load of the network, a maximum packet loss rate of the network, or an assured network availability along the route for a user from the first location to the second location.

11. The method of any of the preceding claims, wherein the request for determining the route for a user from the first location to the second location further comprises information on a desired route parameter, and wherein calculating (106) the route for a user from the first location to the second location is further based on the desired route parameter.

12. The method of claim 11, wherein the desired route parameter is a maximum increase in travel time compared to a shortest travel time between the first location and the second location, or a maximum increase in route distance compared to a shortest route distance between the first location and the second location.

13. The method of any of the preceding claims, further comprising:
receiving (108) updated information on the predicted future state of at least one of the plurality of network access points; and
recalculating (110) at least part of the route for a user from the first location to the second location based on the updated information on the predicted future state of the network access point.

14. A computer program having a program code for performing the method of any of claims 1 to 13, when the computer program is executed on a computer or processor.

15. An apparatus (400) for determining a route for a user from a first location to a second location, comprising:
a first interface (410) configured to receive a request (401) for determining a route for a user from the first location to the second location, the request comprising information on the first location and information on the second location;
a second interface (420) configured to receive information (402) on predicted future states of a plurality of network access points providing access to a mobile communication network, wherein coverage areas of the plurality of network access points at least partly cover an area between the first location and the second location; and
a processor unit (430) configured to calculate the route for a user from the first location to the second location using an algorithm which takes into account the request and the information on the predicted future states of the plurality of network access points.
